# NEW EUROPEAN PATENT SPECIFICATION

(11) **EP 2 583 722 B2**
(45) Date of publication and mention of the opposition decision: **18.09.2019**
(45) Mention of the grant of the patent: 17.06.2015
(21) Application number: 11185396.6
(22) Date of filing: 17.10.2011
(51) Int. Cl.: A62C 27/00, B60P 3/14

(54) **Vehicle compartment comprising a support platform for receiving equipment of a rescue vehicle**
Trageplattform zum Aufnehmen der Ausrüstung eines Rettungsfahrzeugs
Plateforme de support pour équipement de véhicule de secours

(43) Date of publication of application: 24.04.2013
(73) Proprietor: IVECO MAGIRUS AG, 89079 Ulm (DE)
(72) Inventor: Fitz, Harald, 77948 Friesenheim (DE)
(74) Representative: Franzolin, Luigi

(56) References cited:
- EP-A1- 0 082 219
- AT-B- 394 138
- DE-A1- 2 852 297
- DE-A1- 3 517 290
- DE-A1- 4 308 195
- US-A- 4 564 167
- US-A1- 2003 189 353

## Description

The present invention relates to a support platform for receiving equipment of a rescue vehicle according to the preamble of claim 1.

The equipment of rescue vehicles, especially fire fighting vehicles or the like, is generally stored in compartments that are arranged laterally or at the rear end of the vehicle. A support platform according to the preamble of claim 1 is disclosed in EP 0082219. It is of great importance that an easy and quick access to the equipment is provided in a rescue situation. This also stands for very heavy equipment, like a portable generator or a spreading tool. Such equipment can be stored on a support platform inside a vehicle compartment. After opening the compartment, the platform can be moved out to the exterior space so that the equipment stored on the platform can easily be taken from it. By such an arrangement it is avoided that heavy equipment parts must be pulled out of the compartment in a lateral direction.

There are different solutions for mounting the moveable support platform. According to a very simple solution, the platform can be extracted in a linear direction like a drawer from the vehicle compartment through its opening into the exterior space. In this case the platform is mounted on rails that are fixed on the bottom of the compartment. Although this solution is sufficient under the aspect of the accessibility of the equipment, it has the disadvantage that the rails form tripping hazards on the bottom of the compartment. It must be considered that the compartment is a space which might be acceded by person, and its bottom must be kept as clear as possible of any obstructing objects. Another known solution is a swivel support of the platform. In this case the support platform is pivotable around a vertical pivoting axis from a position inside the vehicle compartment outwards to the exterior space. The pivoting axis is arranged on one lateral edge of the platform, namely at a left or right front corner of the support platform (which has usually a rectangular shape). In this respect the term "lateral" refers to the horizontal extension of the opening of the compartment which the platform passes to reach its access position in the exterior space, while the front corners of the platform are those which are facing the exterior side of the vehicle in the storage position of the platform. The pivoting axis is located inside the compartment near the opening, and in the access position of the platform it is swiveled almost completely out of the compartment.

This arrangement avoids the provision of sliding rails in the compartment. However, it has a disadvantage with respect to the dimensions of the platform with respect to the compartment. Namely the width of the opening must be large enough to comprise the pivoting radius of the support platform. In case of a rectangular platform that is hinged at one front corner to the pivoting axis, as described before, the pivoting radius corresponds to one diagonal of the platform. Accordingly the width of the opening must comprise at least the length of the diagonal of the platform. This means that the known pivot support needs a larger compartment than the support platform sliding on rails, as described as the first solution. The space inside the vehicle is limited, and therefore arrangements with the known swiveling support platform cannot always be used.

It is therefore an object of the present invention to provide a support platform for receiving heavy equipment of a rescue vehicle that keeps the bottom of the compartment almost or completely clear of any obstructing fittings like rails, for example, but is suitable also for smaller compartments.

This object is achieved by a support platform comprising features of claim 1.

The support platform according to the present invention combines the advantages of the known support platforms that are pivotably mounted with those which can be extracted in a linear movement out of the compartment. The pivoting axis is slidably arranged so that it can be extracted into a position that is located in the exterior space, i. e. outside the compartment, or at least in the opening area of a compartment, so that the space that is needed for swinging the support platform around the pivoting axis is shifted geometrically out of the compartment. This brings the benefit that the pivoting radius does not have to be considered in the dimensioning of the compartment. The width of the compartment can be dimensioned smaller than that of the known compartments with common pivoting mechanisms with a fixed pivoting axis. On the other hand, no rails or other obstructing elements are present on the bottom of the compartment, and the accident risk is lowered.

This arrangement is further improved by the offset of the pivoting axis from an advancing corner of the platform, which is a corner at the leading edge during the extraction movement to the exterior space, towards the backward diretion, i.e. along the lateral edge of the platform in the direction opposite to the extraction direction. On one hand, this offset arrangement further shortens the necessary pivoting radius of the platform. On the other hand, it provides an additional advantage with respect to the stability requirements of the platform, because the bending forces that act on the platform are smaller than in an arrangement in which the pivoting axis is arranged at a corner position. According to a preferred embodiment of the present invention, the pivoting axis is arranged to slide into an extracted end position that is located in the exterior space outside of the compartment. In this case the pivoting axis is extracted completely out of the compartment.

According to a further feature of the invention, the pivoting axis is mounted at a sliding carriage that is slidably mounted on at least one rail that is fixed inside the compartment. Preferably this sliding carriage is slidably mounted between two rails, namely an upper rail and a lower rail that are disposed at a lateral mounting frame that is provided to be flanged at one side wall of the compartment, and the pivoting axis is represented by a hinge axis of a hinge that hinges the support platform to the sliding carriage. In this arrangement no rails at all are present on the bottom of the compartment, because the side wall supports the mounting frame.

More preferably the sliding carriage comprises a fixed support plate that supports the bottom of the support platform at least in its extracted and swung out position. This support plate can also comprise a handle for extracting the carriage out of the compartment.

According to another preferred embodiment, said support platform comprises a releasable locking means to lock the support platform in at least one position. This could be the extracted and swung out end position for accessing the equipment received by the platform, and/or the storage position in which the support platform is completely received inside the compartment. Just to give one example, such locking means could be provided at the support plate mentioned above.

According to another preferred embodiment, the support platform has a rectangular shape.

According to another preferred embodiment, the support platform forms a bottom of a container.

It is clear that other embodiments are possible, for example, an embodiment of the support platform as a movable shelf.

These and other aspects of the invention will be apparent from and elucidated with reference to a preferred embodiment described hereinafter.
- Fig. 1a to 1d: shows schematically one example of a support platform and its movement from a storage position to an access position in different stages;
- Fig. 2: is a perspective view of a support platform according to the present invention;
- Fig. 3: shows the support platform of Fig. 2 from another viewing angle; and
- Fig. 4 and Fig. 5: show this embodiment of the support platform shown in the preceding figures in the access position, corresponding to different viewing angles.

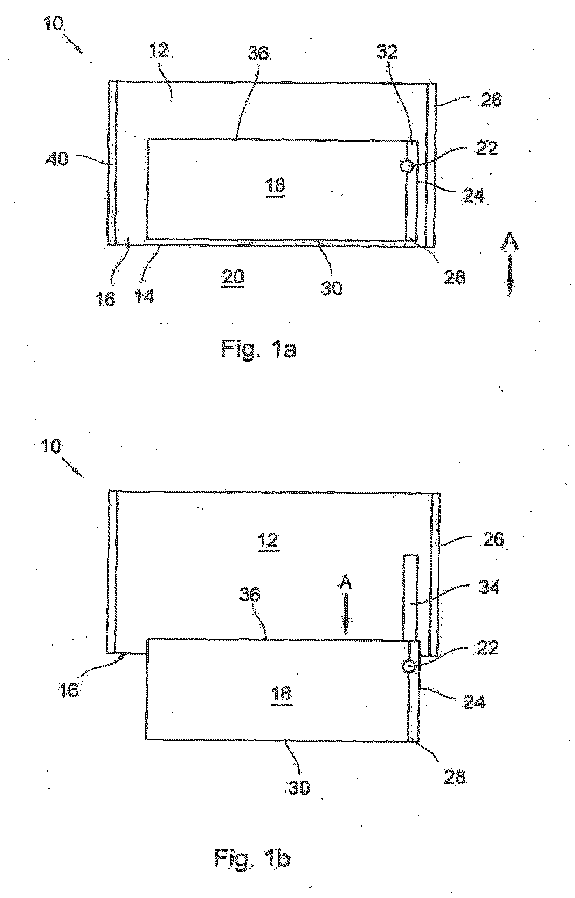

Fig. 1a to 1d are schematic top views of a support platform arrangement 10 for receiving equipment of a rescue vehicle, for example, a fire fighting vehicle. Such equipment could be, for example, a portable generator or a spreading tool. The equipment is stored within a vehicle compartment 12 during non-use, and there should be an easy and quick access to the equipment in a rescue situation.

The compartment 12 has a rectangular layout. Its front side 14 is facing the exterior space 20 outside the vehicle, and it comprises an opening 16 for accessing the compartment 12 from this exterior space. The opening 16 can be closed by a lid, a door or any other suitable closing means (not shown). In the following it will be assumed that the opening 16 is opened. The compartment 12 can be arranged at a lateral side of the vehicle. However, it is also possible that the compartment 12 is located at the rear part of the vehicle so that the opening 16 faces backwards.

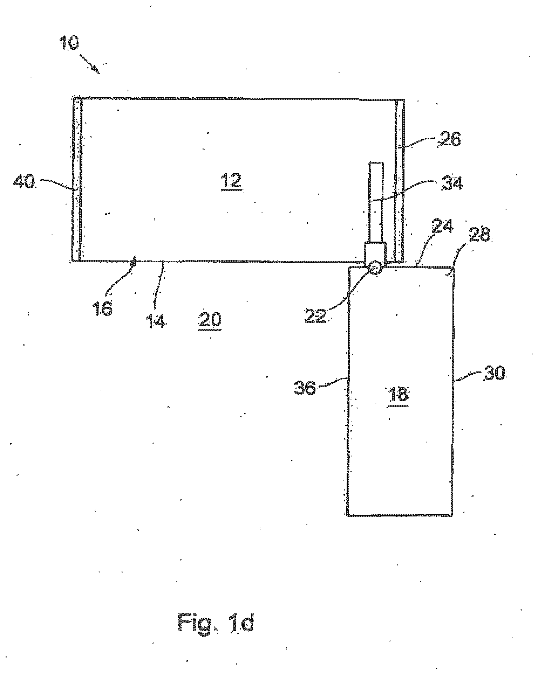

A support platform 18 is located inside the compartment 12. This support platform 18 is provided for receiving and supporting the equipment. To provide an easy access to the equipment, the platform 18 can be moved through the opening 16 out of the compartment 12 towards the exterior space 20. This movement is a combined linear and pivoting movement, as will be explained with respect to the following figures. The support platform 18 can be extracted in a linear direction out of the compartment 12, and afterwards it can be swung around a pivoting axis 22 that is arranged at one lateral edge 24 of the platform 18. In the storage position shown in Fig. 1a, in which the platform 18 is located completely inside the compartment 12, this lateral edge 24 faces the right side wall 26 of the compartment 12. It is noted that the pivoting axis 22 does not necessarily have to be located exactly on the lateral edge 24 but can be slightly offset towards the middle of the platform 18. Moreover, with respect to the rectangular shape of the support platform 18, the pivoting axis 22 is offset along the lateral edge 24 from the front corner 28 of the platform 18 in the backward direction. In the following the terms "front" and "backward" refer to the movement from the storage position into the access position shown in Fig. 1d, i. e. the front corner 28 is located at the leading edge 30 of the platform 18 during this movement, while the backward direction is defined as to be opposite to the moving direction during the extraction of the platform 18 out of the compartment 12.

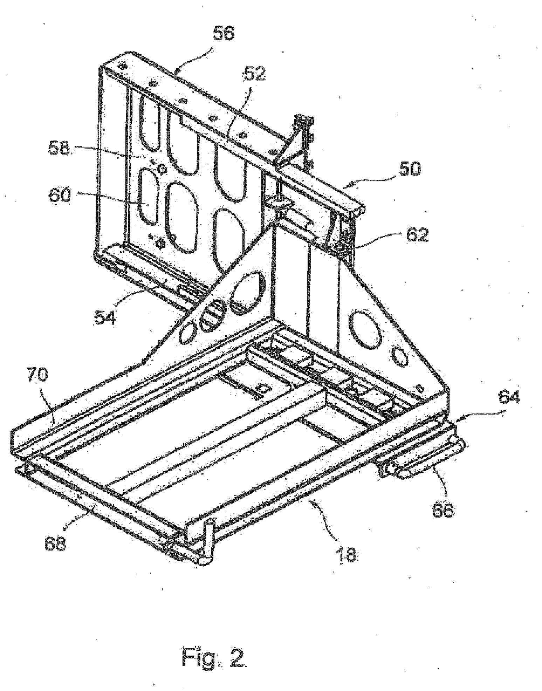

The pivoting axis 22 is offset to be located nearer to the opposite backward corner 32 at the lateral edge 24 than to the front corner 28. The pivoting axis 22 is slidably arranged to slide in a direction towards the exterior space 20. This sliding direction is marked in Fig. 1a and in Fig. 1b by an arrow A. Details of the sliding mechanism are explained below in connection with Fig. 2 to 5. The mechanism comprises a rail that is schematically shown in Fig. 1b and denoted by reference number 34. Along the rail 34 the pivoting axis 22 slides from a position inside the compartment, shown in Fig. 1a, to an extracted end position in the exterior space 20, shown in Fig. 1b. In this end position the support platform 18 is located almost completely in the exterior space 20 in front of the compartment 12, and only its backward edge 36 remains inside the compartment 12 in the area of the opening 16.

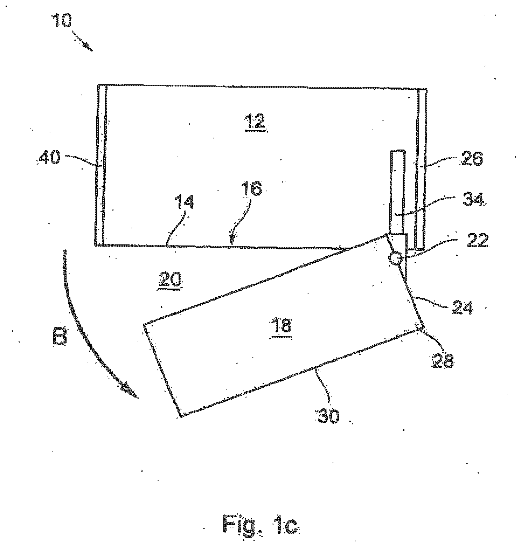

From the position shown in Fig. 1b, the support platform 18 can turn around the pivoting axis 22 in the counterclockwise direction (represented in Fig. 1c by arrow B) into the access position shown in Fig. 1d. In this access position, the support platform 18 is turned with respect to the storage position of Fig. 1a around 90°. The platform 18 is then completely located in the exterior space 20 out of the compartment 12, and the equipment stored on the support platform 18 can be accessed easily.

One can see in Fig. 1b that by the extraction of the pivoting axis 22, the space that is needed for the subsequent pivoting movement of the platform 18 is shifted out of the compartment 12 into the exterior space 20. This implies that the dimensions, especially the lateral width of the compartment 12 (which is the distance between the sidewalls 26 and 40) does not have to be dimensioned to provide a sufficient turning radius to let the platform 18 turn freely out of the compartment 12. Moreover, the pivoting radius is decreased by the offset of the pivoting axis 22 from the front corner 28.

Fig. 2 is a perspective view of the support platform 18 that is hinged to a carriage 50. The carriage 50 is slidably mounted between two rails, namely an upper rail 52 and a lower rail 54 so that the carriage 50 can slide between these rails 52,54 in a linear direction. The rails 52 and 54 are disposed at a lateral mounting frame 56 that comprises a wall 58 with some openings 60 to save material and to decrease the weight of the frame 56. At the upper and lower edge of the wall 58, the rails 52 and 54 are arranged. The wall 58 is provided to be flanged to the right side wall 26 of the compartment 12 (see Fig. 1a).

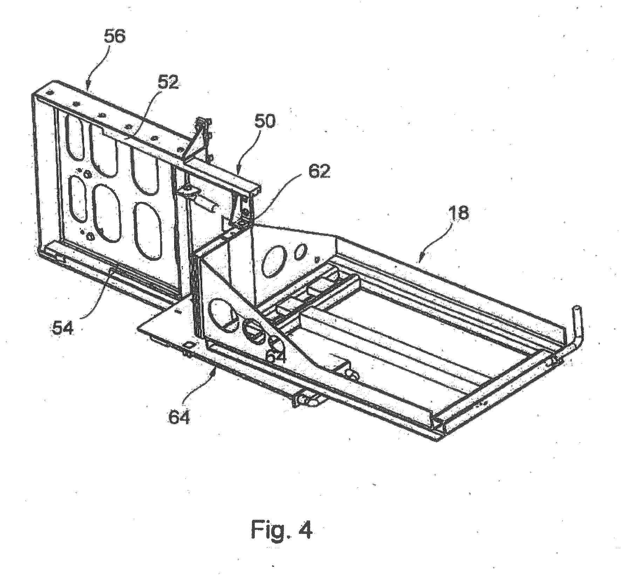

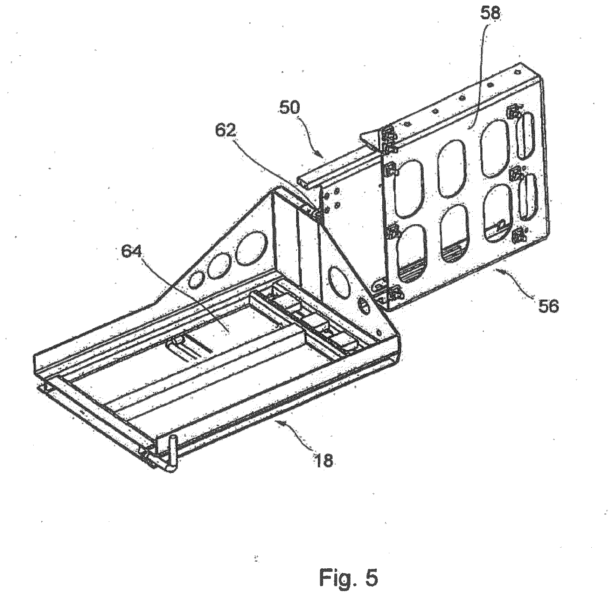

A hinge 62 is provided to connect the support platform 18 and the carriage 50 in a pivotable manner. The hinge axis of the hinge 62 forms the pivoting axis 22, as described above. Fig. 2 shows the support platform 18 in a position that generally corresponds to Fig. 1b, in which the pivoting axis 22 of the hinge 62 is extracted completely out of the compartment 12. The carriage 50 is shown in its extracted end position with respect to the rails 52,54. From this end position, the carriage 50 can be pushed into the compartment 12 so that the carriage 50 moves along the rails 52,54 back to the storage position in which the support platform 18 is located directly next to the wall 58 of the mounting frame 56. The carriage 50 further comprises a fixed support plate 64 that extends to the extraction direction of the carriage 50. It supports the support platform 18 in its extracted position, corresponding to Fig. 1b, as well as in further turning positions corresponding especially to the access position of Fig. 1d, as it is shown in Fig. 4 and 5. The fixed support plate 64 receives the lower end of the pivoting axis 22 of the hinge 62 and comprises a handle 66 at its front side that facilitates gripping of the carriage 50 and pulling it out of the compartment 12. The arrangement shown in Fig. 2 also comprises locking means for locking the support platform 18 in its position with respect to the carriage 50 and/or the position of the carriage 50 in the storage position corresponding to Fig. 1a. These locking means can be provided at the support plate 64, and they can be released easily to provide a quick and fast access to the support platform 18. The carriage 50 can also be provided to slide back into the storage position by its own weight. This can be achieved by inclining the rails 52,54 to a small degree so that the carriage 50 automatically runs back into the compartment 12.

The support platform 18 itself is formed by a bottom frame 68 with a number of connected bars which will be not described further here before the sake of brevity. The rectangular bottom area of the platform 18 is delimited by sidewalls 70 that are at least high enough to prevent equipment resting on the platform 18 from falling off.

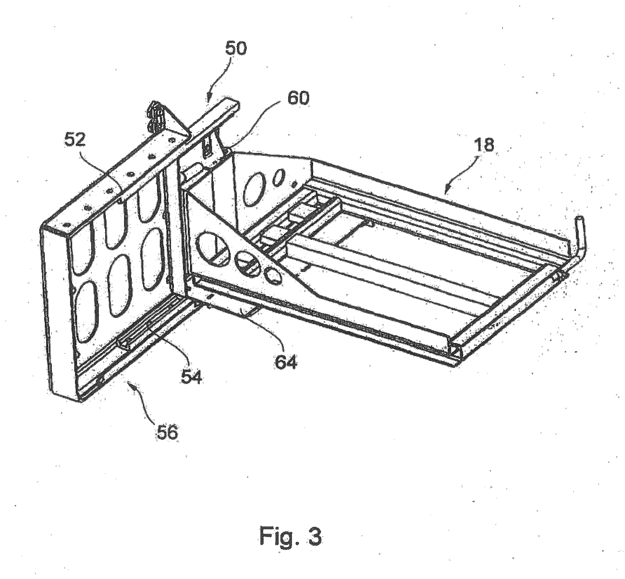

Fig. 3 shows the support platform 18, the carriage 50 and the mounting frame 56 in a perspective view seen from backwards with respect to the extraction direction. Fig. 4 and 5 show the support platform 18 in its access position corresponding to Fig. 1d, where the platform 18 is completely swung out of the compartment 12. In this position it is supported by the plate-like fixed support member 64 to improve the stability of the construction. It can be taken especially from Fig. 5 that the carriage 50 itself has a plate-like shape with guidance means at the upper and lower edges of the carriage 50 that lie within the rails 52 and 54. The hinge 62 is disposed at a front end of the carriage 50.

## Claims

1. Vehicle compartment comprising a support platform (18) for receiving equipment of a rescue vehicle, said platform (18) being pivotable around a vertical pivoting axis (22) from a position inside an inner vehicle compartment (12) outwards to the exterior space (20) wherein said pivoting axis (22) is arranged at one lateral edge (24) of the platform (18), wherein the pivoting axis (22) is slidably arranged to slide towards the exterior space (20) and it is offset from an advancing corner (28) of the platform (18) in the backward direction, said pivoting axis (22) is mounted at a sliding carriage (50) that is slidably mounted on at least one rail (34; 52,54) that is fixed inside the compartment (12) **characterized in that** said sliding carriage (50) is slidably mounted between two rails (52,54), namely an upper rail (52) and a lower rail (54) that are disposed at a lateral mounting frame (56) that is provided to be flanged at one side wall (26) of the compartment (12), and that the pivoting axis (20) is represented by a hinge axis of a hinge (62) that hinges the support platform (18) to the sliding carriage (50).

2. Vehicle compartment comprising a support platform according to claim 1, **characterized in that** the pivoting axis (22) is arranged to slide into an extracted end position that is located in the exterior space (20) outside of the compartment (12).

3. Vehicle compartment comprising a support platform according to claim 1, **characterized in that** the sliding carriage (50) comprises a fixed support plate (64) that supports the bottom of the support platform (18) at least in its extracted and swung out position.

4. Vehicle compartment comprising a support platform according to one of the preceding claims, **characterized by** releasable locking means to lock the support platform (18) in at least one position.

5. Vehicle compartment comprising a support platform according to one of the preceding claims, **characterized in that** the support platform (18) has a rectangular shape.

6. Vehicle compartment comprising a support platform according to one of the preceding claims, **characterized in that** the support platform (18) forms the bottom of a container

## Patentansprüche

1. Fahrzeugabteil, umfassend eine Tragplattform (18) zur Aufnahme von Ausrüstung eines Rettungsfahrzeugs,
welche Plattform (18) um eine vertikale Schwenkachse (22) aus einer Position innerhalb eines inneren Fahrzeugabteils (12) nach außen zum Außenraum (20) schwenkbar ist, wobei die Schwenkachse (22) an einer Seitenkante (24) der Plattform (18) angeordnet ist, und die Schwenkachse (22) gleitend zum Gleiten zum Außenraum (20) angeordnet ist und von einer vorspringenden Ecke (28) der Plattform (18) nach hinten versetzt angeordnet ist, wobei die Schwenkachse (22) an einem Schlitten (50) montiert ist, der gleitend auf zumindest einer Schiene (34;52,54) montiert ist, die in dem Fahrzeugabteil (12) befestigt ist, **dadurch gekennzeichnet, dass** der Schlitten (50) gleitend zwischen zwei Schienen (52,54) montiert ist, nämlich einer oberen Schiene (52) und einer unteren Schiene (54), die an einem seitlichen Montagerahmen (56) angeordnet sind, der dazu vorgesehen ist, an eine Seitenwand (26) des Abteils (12) angeflanscht zu werden, wobei die Schwenkachse (20) durch eine Scharnierachse eines Scharniers (62) gebildet wird, die die Tragplattform (18) mit dem Schlitten (50) schwenkbar verbindet.

2. Fahrzeugabteil, umfassend eine Tragplattform gemäß Anspruch 1, **dadurch gekennzeichnet, dass** die Schwenkachse (22) dazu angeordnet ist, in eine herausgezogene Endposition zu gleiten, die in dem Außenraum (20) außerhalb des Abteils (12) angeordnet ist.

3. Fahrzeugabteil, umfassend eine Tragplattform gemäß Anspruch 1, **dadurch gekennzeichnet, dass** der Schlitten (50) eine feststehende Tragplatte (64) umfasst, die den Boden der Tragplattform (18) zumindest in seiner ausgezogenen und ausgeschwenkten Position stützt.

4. Fahrzeugabteil, umfassend eine Tragplattform gemäß einem der vorhergehenden Ansprüche, **gekennzeichnet durch** lösbare Verriegelungsmittel zur Verriegelung der Tragplattform (18) in zumindest einer Stellung.

5. Fahrzeugabteil, umfassend eine Tragplattform gemäß einem der vorhergehenden Ansprüche, **dadurch gekennzeichnet, dass** die Tragplattform (18) eine rechteckige Form aufweist.

6. Fahrzeugabteil, umfassend eine Tragplattform gemäß einem der vorhergehenden Ansprüche, **dadurch gekennzeichnet, dass** die Tragplattform (18) den Boden eines Behälters bildet.

## Revendications

1. Compartiment de véhicule comprenant une plateforme de support (18) pour recevoir des équipements d'un véhicule de secours, ladite plateforme (18) pouvant pivoter autour d'un axe de pivotement (22) vertical à partir d'une position à l'intérieur d'un compartiment (12) intérieur de véhicule vers l'extérieur vers l'espace extérieur (20), dans lequel ledit axe de pivotement (22) est agencé sur un bord latéral (24) de la plateforme (18), dans lequel l'axe de pivotement (22) est agencé de façon coulissante pour coulisser vers l'espace extérieur (20) et il est décalé d'un coin avançant (28) de la plateforme (18) dans la direction arrière, ledit axe de pivotement (22) est monté sur un chariot coulissant (50) qui est monté de façon coulissante sur au moins un rail (34 ; 52, 54) qui est fixé à l'intérieur du compartiment (12), **caractérisé en ce que** le chariot coulissant (50) est monté de façon coulissante entre deux rails (52, 54), à savoir un rail supérieur (52) et un rail inférieur (54) qui sont disposés sur un cadre de montage latéral (56) qui est prévu pour présenter une bride sur une paroi latérale (26) du compartiment (12), et que l'axe de pivotement (20) est représenté par un axe d'articulation d'une articulation (62) qui articule la plateforme de support (18) sur le chariot coulissant (50).

2. Compartiment de véhicule comprenant une plateforme de support selon la revendication 1, **caractérisé en ce que** l'axe de pivotement (22) est agencé pour coulisser dans une position terminale extraite qui est située dans l'espace extérieur (20) à l'extérieur du compartiment (12).

3. Compartiment de véhicule comprenant une plateforme de support selon la revendication 1, **caractérisé en ce que** le chariot coulissant (50) comprend une plaque de support fixe (64) qui supporte le fond de la plateforme de support (18) au moins dans sa position extraite et déplacée par pivotement vers l'extérieur.

4. Compartiment de véhicule comprenant une plateforme de support selon une des revendications précédentes, **caractérisé par** des moyens de verrouillage libérables pour verrouiller la plateforme de support (18) dans au moins une position.

5. Compartiment de véhicule comprenant une plateforme de support selon une des revendications précédentes, **caractérisé en ce que** la plateforme de support (18) présente une forme rectangulaire.

6. Compartiment de véhicule comprenant une plateforme de support selon une des revendications précédentes, **caractérisé en ce que** la plateforme de support (18) forme le fond d'un contenant.
